# EUROPÄISCHE PATENTSCHRIFT

(11) **EP 1 000 842 B1**
(45) Veröffentlichungstag und Bekanntmachung des Hinweises auf die Patenterteilung: **19.02.2003**
(21) Anmeldenummer: 99121039.4
(22) Anmeldetag: 21.10.1999
(51) Int. Cl.: B62D 43/04

(54) **Ersatzrad-Tragvorrichtung für eine Ersatzradwinde**
Support device for the spare wheel for a spare wheel winch
Dispositif de support d'une roue de secours d'un treuil de roue de secours

(30) Priorität: 13.11.1998 DE 19852432
(43) Veröffentlichungstag der Anmeldung: 17.05.2000
(73) Patentinhaber: E.A. STORZ GMBH & CO. KG, D-78532 Tuttlingen (DE)
(72) Erfinder: Tretsch, Adolf, 78333 Stockach (DE); Geng, Sigurd, 78604 Rietheim-Weilheim (DE)
(74) Vertreter: Hoeger, Stellrecht & Partner

(56) Entgegenhaltungen:
- US-A- 5 188 341

## Beschreibung

Damit das Ersatzrad (Reserverad) innerhalb der Fahrzeugkarosserie keinen Stauraum belegt, ist man seit einiger Zeit vor allem bei sogenannten Vans und Geländewagen dazu übergegangen, das Ersatzrad an der Unterseite des Fahrzeugbodens in einer dort angebrachten Halterung unterzubringen. Da Ersatzräder jedoch ziemlich schwer sind, ist es dann eine äußerst mühsame und unerfreuliche Tätigkeit, das Ersatzrad vom Fahrzeug zu lösen, vor allem aber das Ersatzrad wieder in die Halterung an der Unterseite des Fahrzeugbodens hineinzuheben.

Deshalb hat man derartige Fahrzeuge schon mit einer sogenannten Ersatzradwinde ausgerüstet, welche folgenden Aufbau hat:

Eine vertikal und damit senkrecht zum Fahrzeugboden verlaufende Antriebswelle ragt mit ihrem oberen Endbereich in das Fahrzeuginnere hinein und ist an ihrem oberen Ende mit einem Mehrkant zum Aufsetzen einer Antriebskurbel versehen; unterhalb der Antriebswelle befindet sich eine um eine vertikale Achse drehbare Seilrolle zum Aufwickeln eines Hubseils, welche durch die Antriebswelle über ein Untersetzungsgetriebe antreibbar und von der das Hubseil zunächst horizontal weggeführt ist, worauf es um 90° nach unten umgelenkt wird. Am vertikal verlaufenden, freien Endbereich des Hubseils ist ein Ersatzradträger zum Tragen des Ersatzrades angebracht, welcher gegen die Unterseite der Ersatzradfelge angelegt werden kann, wobei sich dann das Hubseil vom Ersatzradträger nach oben und durch die Nabenöffnungen der Ersatzradfelge hindurch erstreckt.

Eine gattungsgemässe, besonders funktionssichere Ersatzradwinde, welche unter anderem gewährleistet, daß auch starke Erschütterungen des Fahrzeugs nicht zu einem Absinken des weggestauten Ersatzrades führen können, ist Gegenstand der älteren, nach Artikel 54(3) EPÜ zitierten Patentanmeldung EP-A-1 019 278 der Firma E. A. Storz GmbH & Co. KG. Bei dieser Ersatzradwinde ist am vertikal verlaufenden, freien Endbereich des Hubseiles eine Ersatzrad-Tragvorrichtung vorgesehen, welche einen scheibenartige Ersatzradträger zum Abstützen eines die Nabenöffnung umgebenden Bereichs der Ersatzradfelge sowie einen vom freien Hubseil-Endbereich durchsetzten, vertikal orientierten und eine zentrale Öffnung des Ersatzradträgers durchsetzenden Schaft aufweist; am untersten Ende des Hubseils ist ein Widerlager angebracht, welches dem Abstützen sowohl des Ersatzradträgers, als auch des Schafts dient. Bei dem Ersatzradträger handelt es sich um ein scheibenartiges, einstückiges Kunststoffteil mit einem nach oben vorspringenden Zentrieransatz zum passenden Eingreifen in die Nabenöffnung der Ersatzradfelge; in der Draufsicht hat der Ersatzradträger ungefähr die Gestalt eines länglichen Rechtecks, damit sich der Ersatzradträger in bezüglich der Ersatzradfelge schräger Lage durch die Nabenöffnung hindurchführen läßt. Wenn das Ersatzrad auf dem Ersatzradträger aufliegt, wird durch den passend in die Nabenöffnung der Ersatzradfelge eingreifenden Zentrieransatz des Ersatzradträgers verhindert, daß letzterer und die Ersatzradfelge gegeneinander kippen können - ein Verkippen des Ersatzradträgers gegenüber der Ersatzradfelge könnte zur Folge haben, daß der Ersatzradträger durch die Nabenöffnung hindurchgezogen wird und das Ersatzrad herunterfällt.

Die Felgen der Laufräder der verschiedenen hier in Rede stehenden Fahrzeugtypen haben nun Nabenöffnungen unterschiedlichen Durchmessers, weshalb sich zumindest der Ersatzradträger der in der älteren Patentanmeldung EP-A-1 019 278 dargestellten Ersatzradwinde nicht für alle infrage kommenden Felgentypen verwenden läßt - der größte Durchmesser des Ersatzradträgers muß stets nennenswert größer sein als der Durchmesser der Nabenöffnung der Felge, ein für eine große Nebenöffnung geeigneter Ersatzradträger läßt sich aber durch eine wesentlich kleinere Nabenöffnung entweder überhaupt nicht oder nur sehr schwer hindurchführen, und noch gravierender ist der Umstand, daß die zu fordernde Funktionssicherheit bedingt, daß der Zentrieransatz des Ersatzradträgers ohne nennenswertes Spiel in die Nabenöffnung eingreift.

Der Erfindung lag nun die Aufgabe zugrunde, eine Ersatzrad-Tragvorrichtung für eine Ersatzradwinde zu schaffen, welche es nicht erforderlich macht, für jeden Felgentyp einen gesonderten, zum jeweiligen Felgentyp passenden Ersatzradträger herzustellen bzw. bereitzuhalten.

Zur Lösung dieser Aufgabe wird von einer Ersatzrad-Tragvorrichtung ausgegangen, wie sie in der älteren Patentanmeldung EP-A-1 019 278 der Firma E. A. Storz GmbH & Co. KG dargestellt und beschrieben ist, das heißt von einer Ersatz-Tragvorrichtung für eine Ersatzradwinde zum Anheben eines an der Unterseite eines Fahrzeugbodens unterzubringenden Ersatzrades, dessen Felge eine Nabenöffnung zum Hindurchführen eines vertikal verlaufenden freien Endbereichs eines Hubseils der Ersatzradwinde besitzt, wobei die Tragvorrichtung einen scheibenartigen Ersatzradträger zum Abstützen eines die Nabenöffnung umgebenden Felgenbereichs sowie einen durch den freien Hubseil-Endbereich tragbaren, vertikal orientierten und eine zentrale Öffnung des Ersatzradträgers durchsetzenden Schaft aufweist.

Erfindungsgemäß wird eine solche Ersatzrad-Tragvorrichtung so ausgebildet, daß der Ersatzradträger wenigstens zwei Trägersegmente aufweist, welche über Führungsmittel aneinander gehalten und in einer zur Achse der Ersatzradträgeröffnung senkrechten Ebene relativ zueinander beweglich geführt sind, daß der Schaft als Tragschaft für den Ersatzradträger gestaltet ist und einen sich nach oben verjüngenden Konus aufweist, gegen dessen Umfangsfläche die Trägersegmente mit komplementären Innenkonussegmentflächen anlegbar sind, daß wenigstens eine auf die Trägersegmente im Sinne einer Verkleinerung der Außenabmessungen des Ersatzradträgers einwirkende Feder vorgesehen ist, und daß der Ersatzradträger einen von den Trägersegmenten gebildeten und entsprechend segmentierten, nach oben ragenden, hohlen Zentrieransatz zum Eingreifen in die Nabenöffnung der Ersatzradfelge aufweist.

Wurde vor dem Anheben eines Ersatzrades die am Hubseil der Ersatzradwinde hängende erfindungsgemäße Ersatzrad-Tragvorrichtung durch die Nabenöffnung der Ersatzradfelge hindurchgeführt, bewirkt die an der Tragvorrichtung vorgesehene Feder, daß die Trägersegmente des noch nicht belasteten Ersatzradträgers sich einander so weit wie möglich näheren und der Ersatzradträger am Tragschaft oberhalb dessen Konus oder am oberen Ende des Konus zu liegen kommt; der nach oben vorspringende, ungefähr hohlkreiszylindrisch gestaltete oder mit einem sich nach oben verjüngenden Außenkonus versehene Zentrieransatz des Ersatzradträgers hat dann seinen kleinsten Außendurchmesser, welcher nicht größer und vorzugsweise nur minimal kleiner ist als der Durchmesser der Nabenöffnung desjenigen, mit der Ersatzradwinde anzuhebenden Felgentyps, welcher die kleinste Nabenöffnung besitzt. Greift dann der nach oben vorspringende Zentrieransatz passend in die Nabenöffnung ein, verhindert der Zentrieransatz auch bei einer Belastung des Ersatzradträgers durch das angehobene Ersatzrad, daß sich die Trägersegmente infolge der Schrägfläche des Tragschafts voneinander entfernen können und der Ersatzradträger auf dem Tragschaft nach unten gleiten kann. Hat die Felge des anzuhebenden Ersatzrades jedoch eine größere Nabenöffnung als die kleinste der in Betracht kommenden Nabenöffnungen, wird der Ersatzradträger infolge einer Belastung durch das anzuhebende Ersatzrad auf der Schrägfläche des Tragschafts nach unten geschoben, wodurch sich die Trägersegmente voneinander wegbewegen und der wirksame Durchmesser des Ersatzradträger-Zentrieransatzes so lange vergrößert wird, bis der Zentrieransatz gegen den Rand der Nabenöffnung anliegt; ein weiteres Verschieben des Ersatzradträgers auf dem Tragschaft nach unten ist dann nicht mehr möglich. Befindet sich der Ersatzradträger am unteren Ende der Schrägfläche des Tragschaftes, entspricht der wirksame Außendurchmesser des Ersatzradträger-Zentrieransatzes dem Durchmesser der größten infrage kommenden Nabenöffnung. In allen Fällen liegt die Felge auf dem Ersatzradträger so auf, daß der letztere gegenüber der Felge nicht kippen kann.

Wie sich aus den vorstehenden Erläuterungen bereits ergibt, kann der Tragschaft anstelle eines vollständigen Konusses auch einen anders gestalteten Bereich aufweisen, welcher eine oder mehrere Schrägflächen bildet, also zum Beispiel einen keilförmigen Bereich oder einen Bereich mit radial vorstehenden und sich axial erstreckenden, abgeschrägten Rippen. Auch ist es nicht unbedingt erforderlich, daß die Trägersegmente des Ersatzradträgers eine oder mehrere komplementär geneigte Schrägflächen aufweisen; damit ein unerwünschtes Verkippen des durch das Ersatzrad belasteten Ersatzradträgers gegenüber dem Tragschaft jedoch mit Sicherheit verhindert wird, empfehlen sich Ausführungsformen mit einem Konus am Tragschaft und komplementären Innenkonussegmentflächen an den Trägersegmenten.

Wenn vorstehend davon die Rede war, daß der Schaft durch den freien Hubseil-Endbereich getragen werden soll, darf dies nicht derart einengend interpretiert werden, als ob der Tragschaft unmittelbar vom Hubseil getragen werden müßte; vielmehr kann - wie bei der Ersatzradwinde nach der älteren Patentanmeldung EP-A-1 019 278 - am freien Hubseilende ein insbesondere lösbar befestigtes Widerlager vorgesehen sein, zwischen dem und dem Ersatzradträger und/oder dem Tragschaft ein vom Hubseil durchsetztes, elastisch verformbares Element angeordnet ist.

Bei dem erfindungsgemäßen Ersatzradträger könnten zwei einander benachbarte Trägersegmente durch jeweils eine an den beiden Segmenten angreifende Feder gegeneinander gezogen werden, hinsichtlich der Herstellungs- und Montagekosten ist es jedoch zweckmäßiger, die erfindungsgemäße Ersatzrad-Tragvorrichtung so auszubilden, daß die Trägersegmente an einem Außenumfangsbereich des Ersatzradträgers mit einer Umfangsnut versehen sind, in die eine als Ringfeder gestaltete Feder eingelegt ist, so daß nur eine einzige Feder benötigt wird und diese auf einfachste Weise angebracht werden kann. Die Umfangsnut kann dabei auch im Bereich des vom Ersatzradträger nach oben abstehenden Zentrieransatzes vorgesehen werden.

Bei den Führungsmitteln, mit deren Hilfe die Trägersegmente aneinander gehalten und relativ zueinander beweglich geführt werden, könnte es sich beispielsweise um einen oder mehrere separate zylindrische Stifte handeln, welche in Führungsbohrungen der Trägersegmente eingreifen; sowohl hinsichtlich der Herstellung, als auch der Montage des erfindungsgemäßen Ersatzradträgers ist es jedoch wesentlich vorteilhafter, diesen so zu gestalten, daß die Führungsmittel einen am einen Trägersegment vorgesehenen Führungskanal aufweisen, in dem ein am anderen Trägersegment vorgesehener Führungszapfen verschiebbar geführt ist, denn dann lassen sich die Trägersegmente als billige Kunststoff-Spritzgußteile herstellen, da sich der Führungszapfen dann an das zugehörige Trägersegment unmittelbar anformen läßt.

Bei Ausführungsformen mit einer die Trägersegmente umschließenden Ringfeder könnte diese dazu dienen, ein Auseinanderfallen des segmentierten Ersatzradträgers zu verhindern; zweckmäßiger sind jedoch Ausführungsformen, bei denen der Führungszapfen einen im Sinne einer Durchmesserverkleinerung elastisch zusammendrückbaren vorderen Endbereich aufweist und der Führungskanal sowie der Führungszapfenendbereich mit zusammenwirkenden, ein Herausziehen des Führungszapfens aus dem Führungskanal verhindernden Anschlägen versehen sind. Die Trägersegmente lassen sich dann einfach zusammenstecken und aneinander verrasten, und die Verschiebbarkeit der Trägersegmente gegeneinander ist dennoch gewährleistet. Damit sich der Führungszapfen dann trotzdem leicht und einfach in den Führungskanal einführen läßt, empfiehlt es sich, den Ersatzradträger so zu gestalten, daß der Führungszapfen und/oder der Führungskanal an seinem dem Einführen des jeweils anderen Elements dienenden Ende mit einer Einführschräge versehen ist bzw. sind.

Grundsätzlich wäre es denkbar, den Ersatzradträger aus lediglich zwei Trägersegmenten zusammenzusetzen, welche in Richtung senkrecht zur Achse der Ersatzradträgeröffnung relativ zueinander verschiebbar sind. Um jedoch ein Verkippen des durch das anzuhebende Ersatzrad belasteten Ersatzradträgers relativ zur Felge mit Sicherheit zu verhindern, und zwar ein Verkippen in jeder beliebigen Richtung, wird vorgeschlagen, den Ersatzradträger so zu gestalten, daß er ungefähr entlang zweier die Achse der Ersatzradträgeröffnung enthaltender und senkrecht zueinander verlaufender Ebenen in vier Trägersegmente unterteilt ist, da dann der Ersatzradträger-Zentrieransatz an mindestens vier, in Winkelabständen von jeweils 90° voneinander angeordneten Stellen auch am Rand einer größeren Nabenöffnung anliegt.

Ein solcher viergeteilter Ersatzradträger erfordert dennoch keine höheren Werkzeugkosten als ein nur zweigeteilter Ersatzradträger, wenn jeweils zwei einander bezüglich der Achse der Ersatzradträgeröffnung diagonal gegenüberliegende Trägersegmente baugleich sind und jedes Trägersegment sowohl einen senkrecht zur einen Teilungsebene verlaufenden Führungskanal als auch einen senkrecht zur anderen Teilungsebene verlaufenden Führungszapfen aufweist - für die Herstellung der beiden unterschiedlichen Trägersegmente benötigt man dann ebenso zwei Spritzgießwerkzeuge wie im Falle der Herstellung eines zweigeteilten Ersatzradträgers.

Damit sich der Ersatzradträger nicht nach unten über den Tragschaft hinausschieben läßt, wenn sein Zentrieransatz nicht in eine Nabenöffnüng eingreift, weist bei einer bevorzugten Ausführungsform der erfindungsgemäßen Ersatzrad-Tragvorrichtung der Tragschaft unterhalb seines Konus bzw. seiner Schrägfläche ein gegen die Unterseite des Ersatzradträgers legbares Widerlager auf.

Weitere Merkmale, Vorteile und Einzelheiten der Erfindung ergeben sich aus der nachfolgenden Beschreibung sowie der beigefügten zeichnerischen Darstellung einer besonders vorteilhaften Ausführungsform; in der Zeichnung zeigen:
- Fig. 1: den zusammengebauten Ersatzradträger von oben gesehen, und zwar im Zustand mit kleinsten Außenabmessungen, in dem sein Zentrieransatz den kleinsten Außendurchmesser aufweist;
- Fig. 2: einen Schnitt durch den zusammengebauten Ersatzradträger gemäß der Linie 2-2 in Fig. 1;
- Fig. 3: eine der Fig. 1 entsprechende Draufsicht auf den Ersatzradträger, wobei dessen Trägersegmente jedoch die größtmöglichen Abstände voneinander aufweisen, das heißt der Ersatzradträger-Zentrieransatz seinen größten Außendurchmesser aufweist;
- Fig. 4: einen Längsschnitt durch den Tragschaft der Ersatzrad-Tragvorrichtung;
- Fig. 5: eine Draufsicht auf das in Fig. 1 bzw. Fig. 3 rechts unten gezeigte Trägersegment;
- Fig. 6: einen Schnitt durch dieses Trägersegment nach der Linie 6-6 in Fig. 5;
- Fig. 7: eine Seitenansicht dieses Trägersegments, gesehen in Richtung des Pfeils A in Fig. 5;
- Fig. 8: eine Seitenansicht dieses Trägersegments, gesehen in Richtung des Pfeils B in Fig. 5, und
- Fig. 9: eine Draufsicht auf das in Fig. 1 bzw. Fig. 3 rechts oben gezeigte Trägersegment.

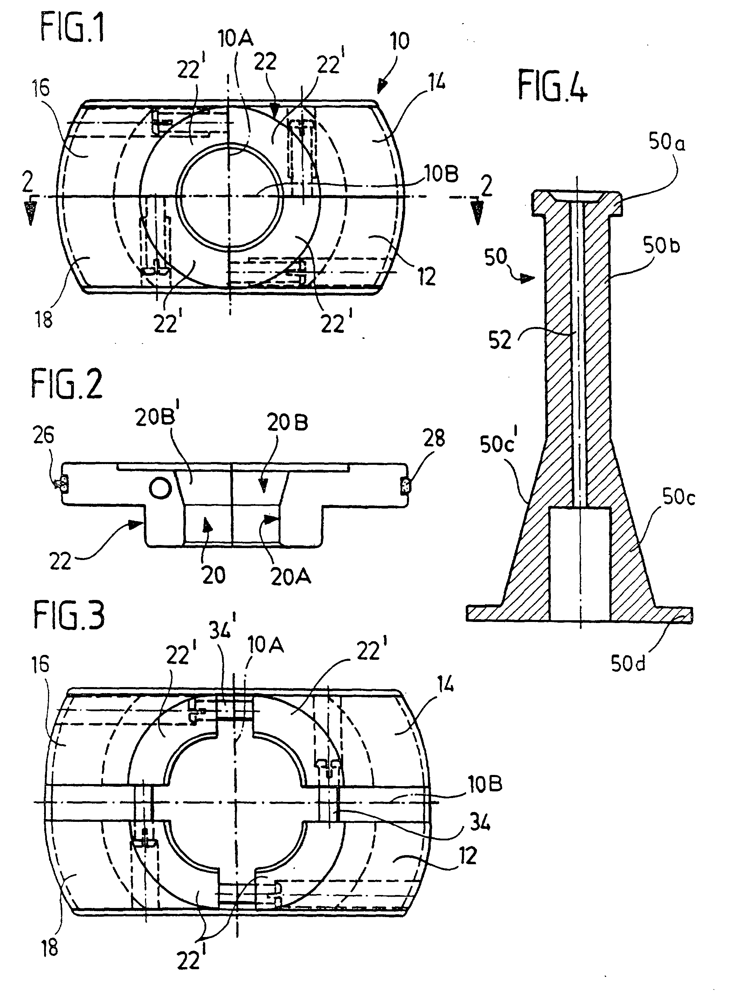

Der in den Fig. 1 bis 3 dargestellte und als Ganzes mit 10 bezeichnete Ersatzradträgcr ist längs zweier senkrecht aufeinander stehender sowie senkrecht zur Zeichnungsebene der Fig. 1 verlaufender Ebenen 10A und 10B in vier Trägersegmente 12, 14, 16 und 18 unterteilt, von denen jeweils die einander diagonal gegenüberliegenden Trägersegmente baugleich sind, das heißt das Trägersegment 16 ist gleich gestaltet wie das Trägersegment 12, unterscheidet sich jedoch in seiner Form von den ihrerseits identisch gestalteten Trägersegmenten 14 und 18. Der Ersatzradträger 10 hat eine zentrale Öffnung 20 mit einem oberen, kreiszylindrischen Abschnitt 20A sowie einem unteren, konischen Abschnitt 20B, wobei die vier von jeweils einem der Trägersegmente gebildeten Innenkonussegmentflächen 20B' alle gleich groß sind.

An seiner in Fig. 1 dem Betrachter zugewandten Oberseite besitzt der Ersatzradträger einen nach oben vorspringenden und als Ganzes mit 22 bezeichneten Zentrieransatz; auch dieser besteht aus vier gleichen Zentriersegmenten 22', von denen jedes an eines der Trägersegmente 12, 14, 16, 18 angeformt ist. In dem in den Fig. 1 und 2 dargestellten Zustand des Ersatzradträgers 10 hat der Zentrieransatz 22 eine zumindest ungefähr kreiszylindrische Außenumfangsfläche, deren Durchmesser gleich oder nur ganz geringfügig kleiner ist als der Durchmesser der kleinsten, in Betracht kommenden Nabenöffnung einer Ersatzradfelge.

Am Außenumfang des Ersatzradträgers 10 ist erfindungsgemäß eine sich in Umfangsrichtung erstreckende Nut 26 vorgesehen, welche sich insbesondere um den ganzen Außenumfang des Ersatzradträgers herum erstreckt und in dem in den Fig. 1 und 2 dargestellten Zustand des Ersatzradträgers dann eine in sich geschlossene Nut bildet; in Abweichung von der gezeigten Ausführungsform könnte die Nut 26 auch im Bereich des Zentrieransatzes 22 am Außenumfang des Ersatzradträgers angeordnet sein, und ferner wäre es möglich, den Ersatzradträger nur an seinen (gemäß Fig. 1 links und rechts liegenden) Schmalseiten mit einer solchen Nut zu versehen. In die Nut 26 ist eine um den Ersatzradträger 10 herumlaufende Feder 28 eingelegt, welche bestrebt ist, den Ersatzradträger in dem in den Fig. 1 und 2 dargestellten Zustand mit kleinsten Außenabmessungen zu halten.

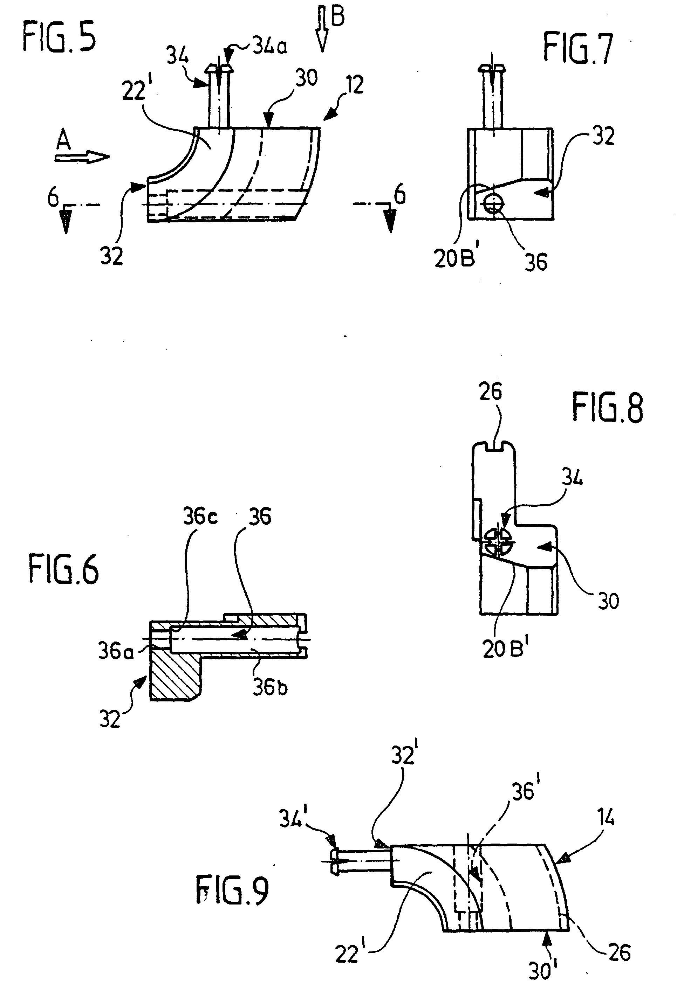

Anhand der Fig. 5 bis 8 soll nun die Gestaltung des Trägersegments 12 (welches mit dem Trägersegment 16 identisch ist) näher beschrieben werden.

Das Trägersegment 12 hat zwei Anlageflächen 30 und 32, mit denen es gegen entsprechende Anlageflächen des Trägersegments 14 bzw. des Trägersegments 18 angelegt werden kann und die in dem in Fig. 1 dargestellten Zustand des Ersatzradträgers in der Ebene 10B bzw. 10A liegen. An das Trägersegment 12 ist ein Führungszapfen 34 angeformt, welcher senkrecht von der Anlagefläche 30 absteht und einen endständigen, verdickten und geschlitzten Kopf 34a aufweist, in dessen Bereich sich der Führungszapfen 34 elastisch verformen läßt, und zwar im Sinne einer Verkleinerung des Durchmessers des Kopfes 34a. An einer der Lage der Wurzel des Führungszapfens 34 entsprechenden Stelle der Anlagefläche 32 erstreckt sich ein senkrecht zu dieser Anlagefläche verlaufender Führungskanal 36 in das Trägersegment 12 hinein, wobei der Führungskanal 36 aus Herstellungsgründen vorzugsweise das ganze Trägersegment 12 durchquert. Der Führungskanal 36 hat die Gestalt einer abgestuften Bohrung mit einem engeren Kanalbereich 36a und einem weiteren Kanalbereich 36b, so daß sich am Übergang des Kanalbereichs 36a in den Kanalbereich 36b eine einen Anschlag 36c bildende Schulter ergibt. Erfindungsgemäß grenzt der engere Kanalbereich 36a an die Anlagefläche 32 an, der Durchmesser des engeren Kanalbereichs 36a ist gleich oder nur ganz geringfügig größer als der Durchmesser des Führungszapfens 34 zwischen dessen Kopf 34a und der Anlagefläche 30, und der Durchmesser des Kanalbereichs 36b ist gleich oder nur geringfügig größer als der Außendurchmesser des unverformten, das heißt spannungsfreien Kopfs 34a des Führungszapfens 34. Wie die Fig. 5 bis 8 erkennen lassen, ist der Kopf 34a des Führungszapfens 34 an seinem Außenumfang abgeschrägt, und auch die Wandung des Führungskanals 36 ist im Bereich der Mündung des Führungskanals in die Anlagefläche 32 abgeschrägt, das heißt mit einer Ansenkung versehen, so daß sich der Führungszapfen eines Trägersegments leicht und einfach in den engeren Bereich eines Führungskanals eines benachbarten Trägersegments einschieben läßt, und zwar unter radialer Verformung seines Kopfs 34a, welcher sich wieder aufweitet, sobald er in den weiteren Kanalbereich gelangt.

Da das Trägersegment 14 bzw. 18 nahezu gleich gestaltet ist wie das Trägersegment 12 bzw. 16, zeigen die Zeichnungen das Trägersegment 14 als Einzelteil nur in einer Draufsicht, und zwar in Fig. 9, in der dieselben Bezugszeichen wie in den Fig. 5 bis 8 verwendet wurden, lediglich unter Hinzufügung eines Strichs. Wie ein Vergleich der Fig. 9 mit Fig. 5 erkennen läßt, unterscheiden sich die beiden nicht baugleichen Trägersegmente (außer daß sie zur Ebene 10B aus Fig. 1 spiegelsymmetrisch gestaltet sind) lediglich dadurch, daß sich der Führungszapfen 34' des Trägersegments 14 von der Anlagefläche 32' weg erstreckt, welche der Anlagefläche 32 des Trägersegments 12 entspricht, während der Führungskanal 36' des Trägersegments 14 in dessen Anlagefläche 30' mündet, welche der Anlagefläche 30 des Trägersegments 12 entspricht.

Wie nun die Fig. 1 und 3 erkennen lassen, handelt es sich bei den in den beigefügten Ansprüchen erwähnten Führungsmitteln um die Führungszapfen 34 und 34' sowie um die Führungskanäle 36 und 36', wobei jedes Trägersegment mittels zweier Führungszapfen und zweier Führungskanäle an den beiden ihm benachbarten Trägersegmenten gehalten und verschiebbar geführt ist, so daß sich jedes Trägersegment sowohl senkrecht zur Ebene 10A, als auch senkrecht zur Ebene 10B aus Fig. 1 relativ zu den beiden ihm benachbarten Trägersegmenten verschieben läßt, um den wirksamen Außendurchmesser des Zentrieransatzes 22 des Ersatzradträgers 10 zu verändern bzw. zu vergrößern, wenn von dem in Fig. 1 dargestellten Zustand des Ersatzradträgers ausgegangen wird.

Ein weiterer Bestandteil der erfindungsgemäßen Ersatzrad-Tragvorrichtung ist ein in Fig. 4 dargestellter Tragschaft 50, auf den sich der Ersatzradträger 10 gemäß Fig. 4 von oben aufschieben läßt, so daß der Tragschaft die zentrale Öffnung 20 des Ersatzradträgers durchgreift; dabei wird der Ersatzradträger 10 mit seiner in Fig. 2 oben liegenden Unterseite nach unten gekehrt gemäß Fig. 4 von oben auf den Tragschaft 50 aufgeschoben.

Der Tragschaft 50 hat einen zentralen, axialen Längskanal 52, mit dem er sich auf das Hubseil einer Ersatzwinde aufschieben läßt; dabei soll der freie, untere Endbereich des Hubseils gemäß Fig. 4 von oben in den Längskanal 52 ein- und durch diesen hindurchgeführt werden, so daß sich dann am unteren Ende des Hubseils ein Widerlager anbringen läßt, über das das Hubseil den Tragschaft 50 unmittelbar oder mittelbar trägt.

Der Tragschaft 50 hat oben einen verdickten Kopf 50a, einen sich an den Kopf nach unten anschließenden kreiszylindrischen Schaftbereich 50b, der unten in einen konischen, sich nach unten erweiternden Schaftbereich 50c übergeht, und schlieBlich verfügt der Tragschaft 50 an seinem unteren Ende über ein flanschartiges Widerlager 50d, dessen Außendurchmesser so groß ist, daß sich auch der maximal aufgeweitete Ersatzradträger 10 nicht über den konischen Schaftbereich 50c nach unten hinausschieben läßt (bei maximal aufgeweitetem Ersatzradträger liegen die Köpfe der Führungszapfen 34 bzw. 34' gegen die Anschläge 36c der Führungskanäle 36 bzw. 36' an). Der Außendurchmesser des Kopfes 50a des Tragschafts ist etwas größer als die lichte Weite der zentralen Öffnung 20 des Ersatzradträgers 10, wenn sich dieser in seinem in Fig. 1 dargestellten Zustand befindet.

Die vom konischen Schaftbereich 50c gebildete Schrägfläche 50c' ist gegenüber der Achse des Tragschafts 50 in gleicher Weise geneigt wie die vom konischen Abschnitt 20B der zentralen Öffnung 20 des Ersatzradträgers 10 gebildete Schrägfläche gegenüber der Achse der zentralen Öffnung 20, wobei der Neigungswinkel vorzugsweise ungefähr 15° beträgt - der Neigungswinkel sollte so gewählt werden, daß sich zwischen dem konischen Schaftbereich 50c des Tragschafts 50 und dem Ersatzradträger 10 keine Selbsthemmung ergeben kann.

Nachdem der Tragschaft 50 am Hubseil der Ersatzradwinde angebracht und der Ersatzradträger 10 auf dem Tragschaft 50 angeordnet wurde, liegt der kreiszylindrische Abschnitt 20A der zentralen Öffnung 20 des Ersatzradträgers gegen den Umfang des kreiszylindrischen Schaftbereichs 50b an - der konische Abschnitt 20B der zentralen Öffnung 20 des Ersatzradträgers 10 kann dabei gegen den Außenumfang des oberen Teils des konischen Schaftbereichs 50c anliegen -, da die Ringfeder 28 bestrebt ist, den Durchmesser der zentralen Öffnung möglichst klein zu halten und infolge dessen den kreiszylindrischen Abschnitt 20A der zentralen Öffnung 20 oberhalb des konischen Schaftbereichs 50c zu halten. Der Ersatzradträger 10 läßt sich dann entgegen der Wirkung der Ringfeder 28 gegenüber dem Tragschaft 50 so kippen, daß sich die ganze erfindungsgemäße Ersatzrad-Tragvorrichtung durch die Nabenöffnung einer Ersatzradfelge hindurchführen läßt. Läßt man daraufhin den Ersatzradträger 10 frei, nimmt er infolge der Wirkung der Ringfeder 28 wieder eine Lage ein, in der die Achse der zentralen Öffnung 20 des Ersatzradträgers mit der Achse des Tragschafts 50 zusammenfällt. Wird sodann die Ersatzradwinde betätigt und das Ersatzrad angehoben, liegt dieses von oben auf dem Ersatzradträger 10 auf und ist bestrebt, diesen auf dem Tragschaft 50 nach unten zu verschieben; eine solche Verschiebung ist aber nur so lange möglich, bis die Zentriersegmente 22' der Trägersegmente 12, 14, 16, 18 gegen den Rand der Nabenöffnung der Ersatzradfelge anliegen, da dann die letztere ein weiteres Aufweiten des Ersatzradträgers 10 verhindert. Durch den konischen Schaftbereich 50c und den konischen Abschnitt 20B der zentralen Öffnung 20 des Ersatzradträgers in Verbindung mit dessen Zentrieransatz 22 und der Nabenöffnung ist dabei stets gewährleistet, daß der Ersatzradträger gegenüber dem Tragschaft 50 nicht verkippt werden kann, das heißt daß die Achse der zentralen Öffnung 20 des Ersatzradträgers mit der Längsachse des Tragschafts 50 zusammenfällt.

Bezüglich einer Ersatzradwinde, bei der sich die erfindungsgemäße Ersatzrad-Tragvorrichtung anwenden läßt, wird auf die ältere Patentanmeldung EP-A-1 019 278 der Firma E. A. Storz GmbH & Co. KG verwiesen.

## Patentansprüche

1. Ersatzrad-Tragvorrichtung für eine Ersatzradwinde zum Anheben eines an der Unterseite eines Fahrzeugbodens unterzubringenden Ersatzrades, dessen Felge eine Nabenöffnung zum Hindurchführen eines vertikal verlaufenden freien Endbereichs eines Hubseils der Ersatzradwinde besitzt, wobei die Tragvorrichtung einen scheibenartigen Ersatzradträger (10) zum Abstützen eines die Nabenöffnung umgebenden Felgenbereichs sowie einen durch den freien Hubseil-Endbereich tragbaren, vertikal orientierten und eine zentrale Öffnung des Ersatzradträgers durchsetzenden Schaft (50) aufweist,
**dadurch gekennzeichnet, daß** der Ersatzradträger (10) wenigstens zwei Trägersegemente (12, 14, 16, 18) aufweist, welche über Führungsmittel (34, 34', 36, 36') aneinander gehalten und in einer zur Achse der Ersatzradträgeröffnung (20) senkrechten Ebene relativ zueinander beweglich geführt sind, daß der Schaft als Tragschaft (50) für den Ersatzradträger (10) gestaltet ist und einen sich nach oben verjüngenden Konus (50c) aufweist, gegen dessen Umfangsfläche die Trägersegmente mit komplementären Innenkonussegmentflächen (20B) anlegbar sind, daß wenigstens eine auf die Trägersegmente im Sinne einer Verkleinerung der Außenabmessungen des Ersatzradträgers (10) einwirkende Feder (28) vorgesehen ist und daß der Ersatzradträger (10) einen von den Trägersegmenten (12, 14, 16, 18) gebildeten und entsprechend segmentierten, nach oben ragenden hohlen Zentrieransatz (22) zum passenden Eingreifen in die Nabenöffnung der Ersatzradfelge aufweist.

2. Ersatzrad-Tragvorrichtung nach Anspruch 1, **dadurch gekennzeichnet, daß** die Trägersegmente (12, 14, 16, 18) an einem Außenumfangsbereich des Ersatzradträgers (10) mit einer Umfangsnut (26) versehen sind und daß die Feder als in diese Umfangsnut eingelegte Ringfeder (28) gestaltet ist.

3. Ersatzrad-Tragvorrichtung nach Anspruch 1 oder 2, **dadurch gekennzeichnet, daß** die zwei einander benachbarte Trägersegmente (z.B. 12, 14) aneinander haltenden Führungsmittel einen am einen Trägersegment (14) vorgesehenen Führungskanal (36') aufweisen, in dem ein am anderen Trägersegment (12) vorgesehener Führungszapfen (34) verschiebbar geführt ist.

4. Ersatzrad-Tragvorrichtung nach Anspruch 3, **dadurch gekennzeichnet, daß** der Führungszapfen (34) einen im Sinne einer Durchmesserverkleinerung elastisch zusammendrückbaren vorderen Endbereich (34a) aufweist und daß der Führungskanal (36) sowie der Führungszapfenendbereich mit zusammenwirkenden, ein Herausziehen des Führungszapfens aus dem Führungskanal verhindernden Anschlägen (36c, 34a) versehen sind.

5. Ersatzrad-Tragvorrichtung nach Anspruch 4, **dadurch gekennzeichnet, daß** der Führungszapfen und/oder der Führungskanal an seinem dem Einführen des jeweils anderen Elements dienenden Ende mit einer Einführschräge versehen ist bzw. sind.

6. Ersatzrad-Tragvorrichtung nach einem oder mehreren der vorstehenden Ansprüche, **dadurch gekennzeichnet, daß** der Ersatzradträger (10) ungefähr entlang zweier die Achse der Ersatzradträgeröffnung (20) enthaltender und senkrecht zueinander verlaufender Ebenen (10A, 10B) in vier Trägersegmente (12, 14, 16, 18) unterteilt ist.

7. Ersatzrad-Tragvorrichtung nach Anspruch 6, **dadurch gekennzeichnet, daß** jeweils zwei einander bezüglich der Achse der Ersatzradträgeröffnung (20) diagonal gegenüberliegende Trägersegmente (12, 16 bzw. 14, 18) baugleich sind und daß jedes Trägersegment sowohl einen senkrecht zur einen Teilungsebene verlaufenden Führungskanal (36, 36') als auch einen senkrecht zur anderen Teilungsebene verlaufenden Führungszapfen (34, 34') aufweist.

8. Ersatzrad-Tragvorrichtung nach einem oder mehreren der vorstehenden Ansprüche, **dadurch gekennzeichnet, daß** der Ersatzradträger (10) - in Richtung der Achse seiner zentralen Öffnung (20) gesehen - ungefähr die Gestalt eines länglichen Rechtecks hat.

9. Ersatzrad-Tragvorrichtung nach einem oder mehreren der vorstehenden Ansprüche, **dadurch gekennzeichnet, daß** der Tragschaft (50) unterhalb seines Konus (50c) mit einem gegen die Unterseite des Ersatzradträgers (10) anlegbaren Widerlager (50d) versehen ist.

10. Ersatzradtragvorrichtung nach einem oder mehreren der vorstehenden Ansprüche, **dadurch gekennzeichnet, daß** der Zentrieransatz (22) einen ungefähr kreiszylindrischen Außenumfang aufweist.

## Claims

1. Carrying device for a spare wheel for a spare wheel winch for raising a spare wheel to be stored on the underside of a vehicle floor, the rim of the spare wheel having a hub opening for passage of a vertically extending, free end portion of a hoisting cable of the spare wheel winch therethrough, the carrying device comprising a disc-like spare wheel carrier (10) for supporting a rim area surrounding the hub opening and a vertically orientated shaft (50) adapted to be carried by the free end portion of the hoisting cable and extending through a central opening of the spare wheel carrier, **characterized in that** the spare wheel carrier (10) comprises at least two carrier segments (12, 14, 16, 18) which are held on one another by guide means (34, 34', 36, 36') and are guided for movement relative to one another in a plane perpendicular to the axis of the spare wheel carrier opening (20), **in that** the shaft is designed as carrying shaft (50) for the spare wheel carrier (10) and has an upwardly tapering cone (50c) against the circumferential surface of which the carrier segments can be made to bear with complementary inner cone segment surfaces (20B), **in that** at least one spring (28) is provided for acting upon the carrier segments so as to reduce the outer dimensions of the spare wheel carrier (10), and **in that** the spare wheel carrier (10) comprises a hollow centring projection (22) formed by the carrier segments (12, 14, 16, 18) and segmented so as to correspond to these and extending upwards for fitting engagement in the hub opening of the spare wheel rim.

2. Carrying device for a spare wheel in accordance with Claim 1, **characterized in that** the carrier segments (12, 14, 16, 18) are provided with a circumferential groove (26) on an outer circumferential portion of the spare wheel carrier (10), and **in that** the spring is designed as a ring spring (28) inserted in this circumferential groove.

3. Carrying device for a spare wheel in accordance with Claim 1 or 2, **characterized in that** the guide means holding two adjacent carrier segments (e.g. 12, 14) on one another comprise a guide channel (36') which is provided on one carrier segment (14) and in which a guide pin (34) provided on the other carrier segment (12) is displaceably guided.

4. Carrying device for a spare wheel in accordance with Claim 3, **characterized in that** the guide pin (34) comprises a front end area (34a) which is elastically compressible so as to decrease its diameter, and **in that** the guide channel (36) and the guide pin end area are provided with co-operating stops (36c, 34a) for preventing the guide pin from being pulled out of the guide channel.

5. Carrying device for a spare wheel in accordance with Claim 4, **characterized in that** the guide pin and/or the guide channel is or are provided with an insertion slope at its or their end serving for introduction of the respective other element.

6. Carrying device for a spare wheel in accordance with any one or several of the preceding claims, **characterized in that** the spare wheel carrier (10) is divided up into four carrier segments (12, 14, 16, 18) approximately along two planes (10A, 10B) containing the axis of the spare wheel carrier opening (20) and extending perpendicularly to one another.

7. Carrying device for a spare wheel in accordance with Claim 6, **characterized in that** two carrier segments (12, 16 and 14, 18, respectively) which are diagonally opposed to one another in relation to the axis of the spare wheel carrier opening (20) are of identical construction, and **in that** each carrier segment comprises both a guide channel (36, 36') extending perpendicularly to one plane of division and a guide pin (34, 34') extending perpendicularly to the other plane of division.

8. Carrying device for a spare wheel in accordance with any one or several of the preceding claims, **characterized in that** the spare wheel carrier (10) - viewed in the direction of the axis of its central opening (20) - has approximately the shape of an elongate rectangle.

9. Carrying device for a spare wheel in accordance with any one or several of the preceding claims, **characterized in that** the carrying shaft (50) is provided below its cone (50c) with an abutment (50d) which can be made to bear against the underside of the spare wheel carrier (10).

10. Carrying device for a spare wheel in accordance with any one or several of the preceding claims, **characterized in that** the centring projection (22) has an approximately circular-cylindrical outer circumference.

## Revendications

1. Dispositif porteur de roue de secours pour un mécanisme de levage de roue de secours destiné à soulever une roue de secours à loger contre la face inférieure d'un plancher de véhicule, dont la jante possède une ouverture de moyeu pour faire passer une zone d'extrémité libre s'étendant verticalement d'un câble de soulèvement du mécanisme de levage de roue de secours, dans lequel le dispositif porteur comprend un support de roue de secours (10) en forme de disque pour supporter une zone de jante entourant l'ouverture de moyeu et comprend une tige (50) susceptible d'être portée par la zone d'extrémité libre du câble de soulèvement, orientée verticalement et traversant une ouverture centrale du support de roue de secours,
**caractérisé en ce que** le support de roue de secours (10) comprend au moins deux segments porteurs (12, 14, 16, 18) qui sont maintenus assemblés et guidés mobiles l'un par rapport à l'autre via des moyens de guidage (34, 34', 36, 36') dans un plan perpendiculaire à l'axe de l'ouverture (20) du support de roue de secours, **en ce que** la tige est réalisée à titre de tige porteuse (50) pour le support de roue de secours (10) et comprend un cône (50c) allant en se rétrécissant vers le haut contre la surface périphérique duquel peuvent venir s'appliquer les segments porteurs par des surfaces de segment coniques intérieures (20B) complémentaires, **en ce qu'**il est prévu au moins un ressort (28) agissant sur les segments porteurs dans le sens d'une réduction des dimensions extérieures du support de roue de secours (10), et **en ce que** le support de roue de secours (10) comprend un talon de centrage creux (22) dépassant vers le haut, formé par les segments porteurs (12, 14, 16, 18) et segmenté en correspondance pour l'engagement adapté dans l'ouverture de moyeu de la jante de roue de secours.

2. Dispositif porteur de roue de secours selon la revendication 1, **caractérisé en ce que** les segments porteurs (12, 14, 16, 18) sont pourvus d'une gorge périphérique (26) sur une zone périphérique extérieure du support de roue de secours (10), et **en ce que** le ressort est réalisé sous forme de ressort annulaire (28) posé dans cette gorge périphérique.

3. Dispositif porteur de roue de secours selon l'une ou l'autre des revendications 1 et 2, **caractérisé en ce que** les deux segments porteurs (par exemple 12, 14) voisins l'un de l'autre sur des moyens de guidage qui les maintiennent assemblés comprennent un canal de guidage (36') qui est prévu sur un segment porteur (14) et dans lequel est guidé en déplacement un pion de guidage (34) prévu sur l'autre segment porteur (12).

4. Dispositif porteur de roue de secours selon la revendication 3, **caractérisé en ce que** le pion de guidage (34) présente une zone d'extrémité avant (34a) compressible élastiquement dans le sens d'une réduction du diamètre, et **en ce que** le canal de guidage (36) ainsi que la zone d'extrémité du pion de guidage sont pourvus de butées coopérantes (36c, 34a) qui empêchent une extraction du pion de guidage hors du canal de guidage.

5. Dispositif porteur de roue de secours selon la revendication 4, **caractérisé en ce que** le pion de guidage et/ou le canal de guidage est ou sont pourvu(s), à son/leur extrémité servant à introduire l'autre élément respectif, d'une pente d'introduction.

6. Dispositif porteur de roue de secours selon l'une ou plusieurs des revendications précédentes, **caractérisé en ce que** le support de roue de secours (10) est subdivisé en quatre segments porteurs (12, 14, 16, 18) approximativement le long de deux plans (10A, 10B) qui contiennent l'axe de l'ouverture (20) du support de roue de secours et qui s'étendent perpendiculairement l'un à l'autre.

7. Dispositif porteur de roue de secours selon la revendication 6, **caractérisé en ce que** deux segments porteurs respectifs (12, 16 ou 14, 18) diagonalement opposés l'un à l'autre par rapport à l'axe de l'ouverture (20) du support de roue de secours sont identiques et **en ce que** chaque segment porteur comprend à la fois un canal de guidage (36, 36') perpendiculaire à l'un des plans de subdivision et un pion de guidage (34, 34') perpendiculaire à l'autre plan de subdivision.

8. Dispositif porteur de roue de secours selon l'une ou plusieurs des revendications précédentes, **caractérisé en ce que** le support de roue de secours (10) - vu en direction de l'axe de son ouverture centrale (20) - présente approximativement la forme d'un rectangle allongé.

9. Dispositif porteur de roue de secours selon l'une ou plusieurs des revendications précédentes, **caractérisé en ce que** la tige porteuse (50) est pourvue, au-dessous de son cône (50c), d'une contre-butée (50d) susceptible d'être appliquée contre la face inférieure du support de roue de secours (10).

10. Dispositif porteur de roue de secours selon l'une ou plusieurs des revendications précédentes, **caractérisé en ce que** le talon de centrage (22) présente une périphérie extérieure approximativement cylindrique à base circulaire.
